(19) **Europäisches Patentamt / European Patent Office / Office européen des brevets**

(11) **EP 3 982 208 B1**

(12) **FASCICULE DE BREVET EUROPEEN**

(45) Date de publication et mention
de la délivrance du brevet:
**03.05.2023 Bulletin 2023/18**

(21) Numéro de dépôt: **20200800.9**

(22) Date de dépôt: **08.10.2020**

(51) Classification Internationale des Brevets (IPC):
**G04C 10/00** *(2006.01)*   **H02K 15/00** *(2006.01)*
**H02K 7/18** *(2006.01)*

(52) Classification Coopérative des Brevets (CPC):
**G04C 10/00; H02K 15/00;** H02K 7/1853;
H02K 2213/03

(54) **PROCEDE DE FABRICATION D'UNE PLURALITE DE GENERATRICES ADAPTEES A UNE APPLICATION HORLOGERE**

VERFAHREN ZUR HERSTELLUNG EINER VIELZAHL VON GENERATOREN, DIE FÜR EINE UHRWERKSANWENDUNG GEEIGNET SIND

METHOD FOR MANUFACTURING A PLURALITY OF GENERATORS ADAPTED TO A TIMEPIECE APPLICATION

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(43) Date de publication de la demande:
**13.04.2022 Bulletin 2022/15**

(73) Titulaire: **The Swatch Group Research and Development Ltd**
**2074 Marin (CH)**

(72) Inventeur: **MATTHEY, Olivier**
**1453 Mauborget (CH)**

(74) Mandataire: **ICB SA**
**Faubourg de l'Hôpital, 3**
**2001 Neuchâtel (CH)**

(56) Documents cités:
**EP-A1- 1 109 082     US-A- 6 124 649**

**Description**

Domaine technique

L'invention concerne la fabrication d'une pluralité de génératrices dont le rotor est muni d'au moins un aimant permanent et le stator comprend au moins une bobine, le rotor et le stator étant agencés de manière à permettre un couplage magnétique qui induit au moins à chaque tour du rotor une tension induite dans ladite au moins une bobine.

Arrière-plan technologique

Une génératrice à aimants permanents incorporée dans une pièce d'horlogerie sert à générer de l'énergie électrique via une tension induite et un courant induit dans la/les bobine/s du stator. La tension induite est généralement redressée, éventuellement multipliée par un élévateur de tension et appliquée à une capacité d'alimentation qui fournit en sortie une tension d'alimentation $U_{alim}$ pour un circuit électronique de la pièce d'horlogerie.

Une génératrice du type horloger dont le stator est muni de trois bobines décalées angulairement de 120° est décrite par exemple dans la demande de brevet EP 1 109 082. Une génératrice du type horloger agencée de manière avantageuse, avec un stator à deux bobines, est décrite dans la demande de brevet EP 3 438 763. Ces deux génératrices présentent un pignon au rotor permettant à un mécanisme, comprenant un barillet et un rouage entrainé par le barillet, d'entraîner en rotation la génératrice. Dans des réalisations particulières, la vitesse de rotation de la génératrice est régulée pour tourner en moyenne à une vitesse de consigne donnée et le mécanisme forme un mouvement mécanique muni d'un affichage analogique de l'heure. La génératrice a donc la double fonction de réguler la marche du mécanisme pour afficher l'heure de manière précise et d'alimenter le circuit électronique de régulation.

Un autre génératrice horlogère selon l'art antérieur est divulguée dans le document US6124649A.

Résumé de l'invention

L'inventeur a mis en lumière un problème général en lien avec des pièces d'horlogerie comprenant une génératrice et une source d'énergie mécanique prévue pour entraîner cette génératrice. Ce problème général découle de deux éléments antagonistes : D'une part, la réserve de marche de telles pièces d'horlogerie et, d'autre part, le coût de fabrication de ces pièces d'horlogerie. Pour augmenter la réserve de marche d'une pièce d'horlogerie du type considéré, il est nécessaire de diminuer la puissance consommée par le mécanisme et la génératrice et également la puissance électrique consommée par le circuit électronique de régulation qui fonctionne normalement dans une plage de tension d'alimentation déterminée. Ainsi, pour diminuer la puissance électrique consommée, il faut prévoir une tension d'alimentation qui soit la plus proche possible d'une tension minimale de la plage de tension d'alimentation susmentionnée tout en demeurant supérieure à la tension minimale. Cependant, pour assurer que la tension d'alimentation ne soit alors pas inférieure à la tension minimale, il est nécessaire de prévoir de faibles tolérances de fabrication pour la production d'une pluralité de génératrices prévues pour une application horlogère. Or, imposer de faibles tolérances de fabrication pour les génératrices, en particulier pour les rotors de telles génératrices, augmente le prix de fabrication de ces génératrices de manière importante et donc le coût de production des pièces d'horlogerie en question. Il semble donc a priori qu'il faille choisir entre une réserve de marche supérieure et un coût de production relativement bas.

La présente invention a pour but de fournir une pluralité de génératrices à aimants permanents, configurées pour une application horlogère dans laquelle chaque génératrice est entraînée en rotation par un mécanisme qui est entraîné par une source d'énergie mécanique et où chaque génératrice alimente un circuit électronique fonctionnant dans une plage de tension d'alimentation donnée, qui permettent de consommer relativement peu de puissance électrique pour une application horlogère donnée, et ainsi d'avoir une réserve de marche relativement élevée pour la source d'énergie prévue, tout en ayant des coûts de production de la pluralité de génératrices qui demeurent relativement bas, en particulier grâce à des tolérances de fabrication des rotors des génératrices qui soient relativement grandes.

A cet effet, l'invention concerne un procédé de fabrication d'une pluralité de génératrices qui comprend une étape de fabrication de bobines, une étape de fabrication de rotors, et ensuite une étape d'assemblage d'une pluralité de stators, formés chacun d'un nombre donné de bobines fabriquées lors de l'étape de fabrication de bobines, respectivement avec une pluralité de rotors, fabriqués lors de l'étape de fabrication de rotors, pour obtenir la pluralité de génératrices. L'étape de fabrication de rotors est réalisée, avec des tolérances données, sur la base de données définissant un rotor de référence. L'étape de fabrication de bobines comprend la fabrication de N pluralités de bobines, semblables au sein d'une même pluralité et différentes d'une pluralité à l'autre, N étant un nombre entier supérieur à un (N > 1). Avant l'étape d'assemblage de la pluralité de stators avec la pluralité de rotors est effectuée une étape de classification de ces rotors dans N classes de rotors, les rotors de chacune des N classes de rotors étant sélectionnés de sorte qu'ils présentent un facteur de couplage magnétique avec un stator de référence, formé avec le nombre donné de bobines de référence placées dans une configuration de référence relativement à chaque rotor, qui est situé dans une plage de valeurs continue de classification, laquelle est non superposée aux plages de valeurs continues de classification des autres classes de rotors. Ensuite, les N pluralités de bobines sont associées respectivement aux N classes de rotors, formant ainsi N couples 'pluralité de bobines et classe de rotors associées', de sorte que les rotors de chaque classe de rotors présentent chacun un facteur de couplage magnétique avec un stator correspondant, formé dudit nombre donné de bobines de la pluralité de bobines associée à la classe de rotors considérée, qui est situé dans une plage de valeurs optimisée parmi N plages de valeurs optimisées relatives respectivement aux N couples, chacune des N plages de valeurs optimisées étant au moins partiellement superposée avec une autre de ces N plages de valeurs optimisées, de sorte qu'une valeur minimale des N plages de valeurs optimisées est supérieure à une valeur minimale desdites N plages de valeurs continues de classification et qu'une valeur maximale de ces N plages de valeurs optimisées est inférieure à une valeur maximale des N plages de valeurs continues de classification, et de sorte que les N plages de valeurs optimisées soient situées à l'intérieur d'une plage de valeurs spécifique pour le facteur de couplage magnétique qui correspond à une plage de tension d'alimentation donnée pour l'application horlogère prévue pour la pluralité de génératrices. L'étape d'assemblage est finalement réalisée en assemblant les rotors de chaque classe de rotors avec un stator formé par ledit nombre donné de bobines de la pluralité de bobines associée avec laquelle cette classe de rotors forme un desdits N couples.

Selon un mode de mise en oeuvre préféré de l'invention, les N pluralités de bobines sont prévues et les N couples 'pluralité de bobines et classe de rotors associées' sont formés de sorte que chacune des N plages de valeurs optimisées est au moins partiellement superposée avec chaque autre plage de valeurs optimisée.

### Brève description des figures

L'invention sera décrite ci-après de manière plus détaillée à l'aide des dessins annexés, donnés à titre d'exemples nullement limitatifs, dans lesquels :

-   La Figure 1 est une vue de dessus d'une génératrice du type horloger, selon un mode de réalisation particulier, pouvant être obtenue par le procédé de fabrication d'une pluralité de génératrices selon un mode de mise en oeuvre de l'invention ;

-   La Figure 2 est une coupe transversale, selon la ligne 'II-II', de la génératrice de la Figure 1 ;

-   La Figure 3 montre une courbe d'un couple de force fourni par un barillet incorporé dans une pièce d'horlogerie comprenant une génératrice entraînée en rotation par un mécanisme entraîné par ce barillet ; et

-   La Figure 4 montre la plage de tension fonctionnelle pour un circuit électronique de régulation alimenté par la génératrice de la pièce d'horlogerie considérée à la Figure 3 et les trois plages de valeurs optimisées pour le facteur de couplage magnétique de trois couples 'pluralité de bobines et classe de rotors associées' prévus dans une variante du mode de mise en oeuvre considéré de l'invention.

### Description détaillée de l'invention

En référence aux figures on décrira un mode de mise en oeuvre du procédé de fabrication d'une pluralité de génératrices selon l'invention.

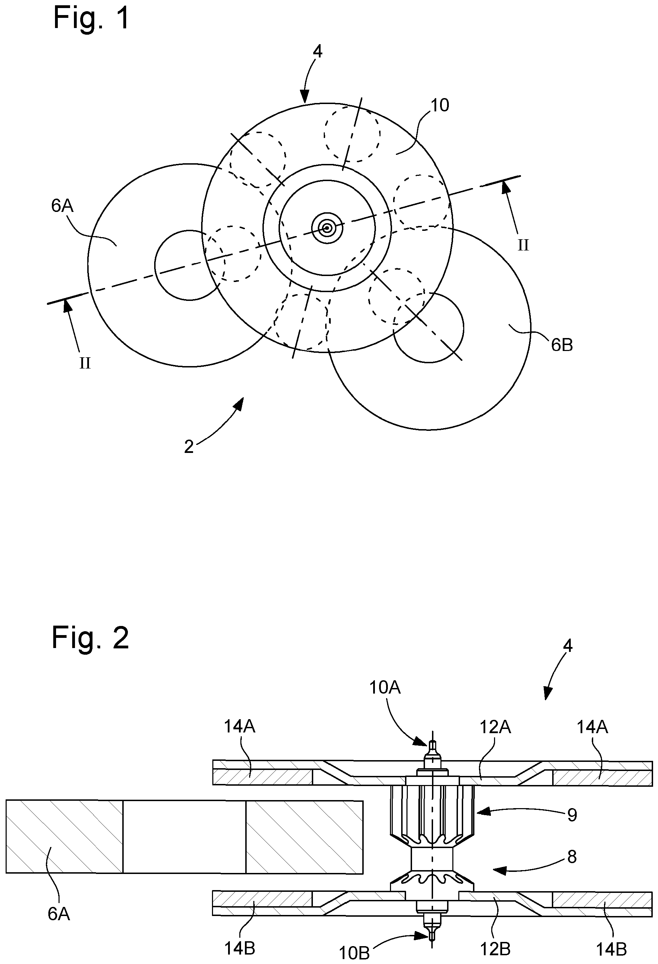

Un mode de réalisation d'une génératrice du type horloger est représentée aux Figures 1 et 2. Cette génératrice 2 comprend un rotor 4 et un stator formé de deux bobines identiques 6A et 6B. Les bobines sont des bobines annulaires plates sans noyau. Dans une variante, chaque bobine a un diamètre extérieur compris entre 3.5 mm et 5.0 mm, un diamètre intérieur d'environ 1.0 mm et une épaisseur comprise entre 0.7 mm et 1.0 mm. Avec un diamètre de fil électrique inférieur à 20 microns, le nombre de tours du fil électrique est compris entre 4'000 et 6'000 tours. On remarquera que les techniques de fabrication actuelles permettent de fabriquer aisément une pluralité de bobines identiques (c'est-à-dire semblables puisque de petites variations dimensionnelles peuvent toutefois apparaître dans un lot de bobines fabriquées avec les mêmes spécifications). Le diamètre du fil électrique peut être sélectionné précisément et le nombre de tours de ce fil peut être prévu constant à l'aide d'une simple commande électronique gérant la fabrication d'une pluralité de bobines.

Le rotor 4 est formé d'un arbre 8 et de deux flasques 12A et 12B portant chacun six aimants permanents 14A, respectivement 14B. Les aimants sont agencés dans l'espace entre les deux flasques avec une aimantation axiale et une même polarité. L'arbre 8 porte un pignon intérieur 9 situé entre les deux flasques et prévu pour engrener avec une roue de multiplication du mécanisme horloger (non représenté) dans lequel est incorporée la génératrice. Ce mécanisme horloger comprend un affichage analogique de l'heure qui est entraîné par un rouage lui-même entraîné par un barillet, formant une source d'énergie mécanique embarquée, et en relation cinématique avec la génératrice qui régule la marche du mécanisme, à savoir du rouage et de l'affichage analogique, via un circuit électronique de régulation (non représenté) associé à la génératrice, ce circuit électronique régulant la vitesse de rotation de la génératrice par des impulsions de freinage appliquées à la génératrice de manière que sa vitesse moyenne soit égale à une vitesse de consigne prévue pour une indication de l'heure sans dérive temporelle. L'arbre 8 comprend classiquement deux pivots 10A et 10B qui sont insérés dans deux paliers respectifs pour pivoter le rotor. On notera que les aimants permanents peuvent avoir une autre forme, en particulier une forme ovale. Dans une variante spécifique, les six aimants permanents portés par un flasque sont contigus, avec un profil définissant un secteur annulaire, et forment ainsi ensemble un anneau aimanté. Dans une autre variante, les six aimants sont formés par un anneau aimanté monobloc (formé en une seule pièce) qui est magnétisé de sorte à former, du côté d'un plan général médian dans lequel s'étendent les deux bobines 6A et 6B, six pôles magnétiques alternés avec un flux magnétique sortant de l'aimant annulaire principalement selon une direction axiale. On parle dans un tel cas d'un aimant multipolaire, c'est-à-dire d'un aimant présentant sur une de ses faces (ou à sa surface latérale) plusieurs pôles magnétiques. On notera encore que le nombre d'aimants bipolaires ou de pôles magnétiques du côté dudit plan général peut être un nombre pair différent de six, par exemple huit. Dans une variante de réalisation avec des flasques en matériau magnétique, seul un des deux flasques porte des aimants, l'autre flasque servant alors seulement à la fermeture des flux magnétiques engendrés par les aimants.

La fabrication du rotor, notamment étant donné les petites dimensions des aimants permanents 14A et 14B, est relativement délicate pour remplir des spécifications prédéterminées avec de faibles tolérances. En effet, plusieurs paramètres peuvent varier de manière cumulative, de sorte que le facteur de couplage magnétique d'une pluralité de rotors, fabriqués selon de mêmes spécifications, avec un stator de référence formé de deux bobines de référence placées dans une configuration de référence relativement à chaque rotor, peut s'étendre sur une plage de valeurs relativement étendues, à moins de prévoir de faibles tolérances qui engendrent un coût de production élevé, notamment à cause d'un nombre d'aimants permanents et aussi de flasques munis de tels aimants qui doivent être alors éliminés car finalement en dehors des tolérances prévues. En effet, le facteur de couplage magnétique $K_u$ peut varier notamment en fonction : - des tolérances géométriques de l'aimant (hauteur, diamètre), - de la variation du champ magnétique $Br$ des aimants permanents en fonction des lots de fabrication, - de la tolérance de positionnement des aimants sur chacun des deux flasques, - de la tolérance de positionnement axial des aimants, - de la tolérance du parallélisme des deux flasques portant les aimants.

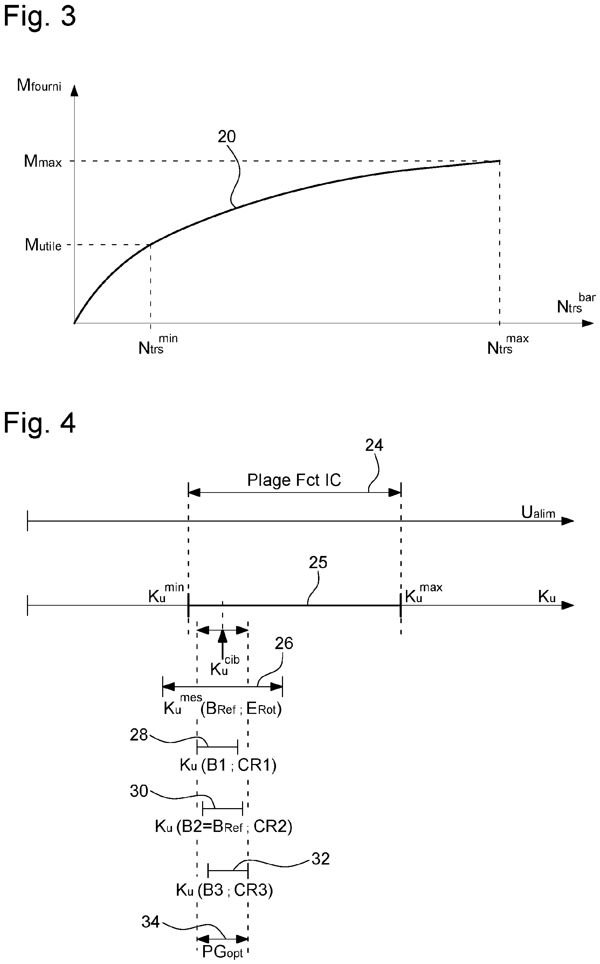

La Figure 3 montre une courbe 20 donnant le couple de force $M_{fourni}$ qui est fourni par un barillet en fonction de son niveau d'armage. De manière connue, le couple de force fourni par un barillet dépend de son niveau d'armage et donc du nombre de tours relatif $N_{trs}^{bar}$ entre l'arbre et le tambour du barillet, nommé 'nombre de tours d'armage', depuis une position angulaire de désarmage où le ressort du barillet est détendu. Le couple de force maximal $M_{max}$ est naturellement fourni pour un nombre de tours d'armage maximal $N_{trs}^{max}$. Lorsque le ressort de barillet se détend et ainsi le barillet se désarme, le couple de force fourni par le barillet diminue jusqu'à arriver à un couple de force utile $M_{utile}$, correspondant à un certain nombre tours d'armage restant $N_{trs}^{min}$, qui est le couple de force nécessaire pour assurer le fonctionnement correct de la pièce d'horlogerie, en particulier de la génératrice 2 et du mécanisme qui lui est associé et qui relie cinématiquement le barillet et cette génératrice. Il est important de réaliser que plus le couple de force utile est petit, plus le nombre de tours d'armage utile, soit '$N_{trs}^{max} - N_{trs}^{min}$', est grand et donc, pour un mécanisme d'indication de l'heure, plus la réserve de marche est grande puisque le barillet tourne à vitesse constante en fonctionnement normal. Avoir la plus grande réserve de marche pour une pièce d'horlogerie, notamment du type à source d'énergie mécanique embarquée (barillet), est un objectif principal pour le fabricant d'une telle pièce d'horlogerie, car ceci correspond généralement au souhait du consommateur. En partant du fait que le couple de force utile pour le mécanisme est déterminé et optimisé séparément, on peut donc s'intéresser plus spécifiquement au couple de force utile qui est nécessaire pour assurer le fonctionnement de l'ensemble formé de la génératrice et du circuit électronique de régulation associé à cette génératrice. Ainsi, pour augmenter la réserve de marche de la pièce d'horlogerie incorporant ledit ensemble, il est avantageux de minimiser le couple de force utile pour cet ensemble. Comme la puissance utile $P_{utile}$ est égale par définition au couple de force utile multiplié par la vitesse de rotation du rotor de la génératrice, minimiser la puissance utile, pour une vitesse de rotation égale à une vitesse de consigne, est équivalent à minimiser le couple de force utile $M_{utile}$. La puissance utile $P_{utile}$ pour l'ensemble 'génératrice et circuit électronique de régulation de cette génératrice' est donnée par la formule mathématique suivante :

$$P_{utile} = P_{mec} + P_{IC} + P_{bob}$$

La puissance mécanique $P_{mec}$ pour maintenir à une vitesse de rotation constante la génératrice dépend essentiellement des frottements secs et visqueux du rotor de cette génératrice. On cherchera donc à minimiser ces frottements pour augmenter la réserve de marche de la pièce d'horlogerie. La puissance électrique $P_{bob}$ consommée dans les bobines dépend de la résistance électrique de ces bobines et du courant électrique circulant dans celles-ci. Optimiser la résistance électrique des bobines en tenant compte notamment de l'encombrement des bobines et du couplage magnétique avec les aimants du rotor qui est nécessaire pour pouvoir produire une tension et un courant d'alimentation suffisamment élevés est aussi avantageux pour la réserve de marche. Finalement, on peut augmenter la réserve de marche de la pièce d'horlogerie en diminuant la puissance électrique Pic consommée par le circuit électronique de régulation. La présente invention concerne ce dernier aspect. La problématique liée à la puissance électrique $P_{IC}$ que résout la présente invention ne concerne pas la fabrication du circuit électronique de régulation, lequel sera choisi avantageusement pour ses caractéristiques de basse consommation électrique, mais concerne la fabrication d'une pluralité de génératrices, selon des spécifications données, qui puissent toutes fournir une tension d'alimentation suffisante mais la plus faible possible de sorte que le circuit électronique de régulation associé à chacune de ces génératrices puisse être correctement alimenté tout en consommant relativement peu de puissance électrique.

La puissance électrique $P_{IC}$, consommée par le circuit électronique alimenté par la génératrice, est donné par la formule mathématique suivante :

$$P_{IC} = U_{alim} \cdot I_{IC} = g \cdot U_{ind} \cdot I_{IC}$$

où g est le facteur multiplicatif d'un élévateur de tension avantageusement prévu et $U_{ind}$ est la tension induite dans les bobines de la génératrice et redressée, c'est-à-dire la tension fournie en entrée de l'élévateur de tension qui est relié en sortie à une capacité d'alimentation fournissant la tension d'alimentation $U_{alim}$. La tension induite $U_{ind}$ est égale au facteur de couplage magnétique $K_u$ , intervenant entre les aimants du rotor et les bobines du stator de la génératrice, multiplié par la vitesse de rotation $\omega_g$ (donnée en radians par seconde) du rotor, soit $U_{ind} = K_u \cdot \omega_g$. Comme indiqué à la Figure 4, le circuit électronique de régulation est généralement agencé de manière à pouvoir fonctionner correctement avec une tension d'alimentation $U_{alim}$ située dans une plage de fonctionnement 24, c'est-à-dire entre une tension d'alimentation minimum $U_{alim}^{min}$ et une tension d'alimentation maximale. Etant donné que la tension d'alimentation $U_{alim}$ est une fonction du facteur de couplage magnétique $K_u$ ($U_{alim} = g \cdot U_{ind} = g \cdot K_u \cdot \omega_g$), le circuit électronique peut donc fonctionner correctement lorsque le facteur de couplage magnétique $K_u$ entre le rotor et le stator de la génératrice associée est situé dans une plage de valeurs 25 correspondante (dans la variante décrite ici, la vitesse de rotation est constante et $U_{alim}$ est proportionnelle à $K_u$ ).

Comme indiqué précédemment, le coût de production d'une pluralité de génératrices du type horloger dépend de manière significative des tolérances de fabrication prévues pour la fabrication d'une pluralité de rotors destinés à former cette pluralité de génératrices. Ainsi, pour minimiser le coût de production, la personne du métier pensera à prévoir de relativement grandes tolérances de fabrication pour la pluralité de rotors en prenant comme valeur cible pour le facteur de couplage magnétique $K_u$ d'un rotor de référence (défini par des données fournies par une spécification établie pour le rotor de la génératrice prévue) une valeur éloignée de la valeur minimale $K_u^{min}$ et également de la valeur maximale $K_u^{max}$, et donc une valeur proche du milieu de la plage de valeurs 25 relative au facteur de couplage magnétique, de sorte que la courbe de Gauss donnant la distribution du facteur de couplage magnétique pour la pluralité de génératrices fabriquées à relativement bas coût soit essentiellement située dans cette plage de valeurs 25 qui est relativement étendue. Il résulte d'une telle approche que la majorité de la pluralité des circuits électroniques respectivement associés à la pluralité de génératrices consommeront relativement beaucoup de puissance électrique, c'est-à-dire que la valeur de la puissance électrique $P_{IC}$ pour la majorité des circuits électroniques sera bien supérieure à une valeur minimale $P_{IC}^{min} = U_{alim}^{min} \cdot I_{IC} = g \cdot K_u^{min} \cdot \omega_g \cdot I_{IC}$ permettant d'alimenter correctement un tel circuit électronique. Il résulte donc de cette approche pour diminuer le coût de production des génératrices que la majorité des pièces d'horlogerie équipées de ces génératrices auront une réserve de marche diminuée par une consommation de leur circuit électronique de régulation bien supérieure à une consommation minimale suffisante pour le fonctionnement d'un tel circuit électronique et donc par une consommation électrique excessive.

Pour résoudre ce problème, il est prévu, selon une variante de l'invention décrite en référence à la Figure 4, un procédé de fabrication d'une pluralité de génératrices à aimants permanents du type horloger 2 comprenant une étape de fabrication de bobines, une étape de fabrication de rotors, et ensuite une étape d'assemblage d'une pluralité de stators, formés chacun de deux bobines 6A, 6B fabriquées lors de l'étape de fabrication de bobines, respectivement avec une pluralité de rotors 4, fabriqués lors de l'étape de fabrication de rotors, pour obtenir la pluralité de génératrices. L'étape de fabrication de rotors est réalisée, avec des tolérances données, sur la base de données définissant un rotor de référence selon des spécifications relatives aux génératrices prévues. L'étape de fabrication de bobines comprend la fabrication de trois pluralités de bobines B1, B2 et B3, semblables au sein d'une même pluralité et différentes d'une pluralité à l'autre. Dans une variante avantageuse, les trois bobines B1, B2 et B3 diffèrent seulement par le nombre de tours du fil électrique constituant ces bobines.

Avant l'étape d'assemblage de la pluralité de stators avec la pluralité de rotors, une étape de classification de la pluralité de rotors dans trois classes de rotors CR1, CR2 et CR3 est effectuée. Pour ce faire, les rotors sont amenés dans une station de test dans laquelle chaque rotor est assemblé momentanément avec un stator de référence pour effectuer une mesure du facteur de couplage magnétique de la génératrice de test ainsi formée momentanément pour la mesure. Le stator de référence est formé par deux bobines de référence $B_{Ref}$ qui sont placées dans une configuration de référence relativement à chaque rotor testé pour former une génératrice de test. Pour mesurer le facteur de couplage magnétique, le rotor de chaque génératrice de test est entraîné en rotation par exemple à l'aide d'un jet d'air tangentiel à l'axe de rotation du rotor. En mesurant ensuite la vitesse de rotation du rotor et la tension induite dans le stator de référence, on peut ainsi calculer une valeur du facteur de couplage magnétique pour la génératrice de test considérée et associer cette valeur mesurée au rotor testé.

Pour limiter le coût de production de la pluralité de génératrices, le facteur de couplage magnétique $K_u$ de la pluralité de rotors avec le stator de référence, agencé dans la configuration de référence relativement à chaque rotor dans la station de test, s'étend dans une plage de valeurs 26 relativement étendue car les rotors sont fabriqués avec des tolérances assez grandes. Cette plage de valeurs 26 est donc une plage de valeurs mesurées $K_u^{mes}$ ($B_{Ref}$ ; $E_{Rot}$) pour la pluralité de rotors $E_{Rot}$ avec un stator de référence formé de deux bobines de référence $B_{Ref}$.

La classification des rotors R1, R2 et R3 respectivement dans les trois classes de rotors CR1, CR2 et CR3 est effectuée par une division de la plage de valeurs mesurées $K_u^{mes}$ (plage de valeurs 26) en trois parties continues de classification qui sont non superposées. Ces trois parties continues sont prévues contiguës et couvrent la totalité de la plage de valeurs 26 pour englober la pluralité de rotors. Les trois parties continues de classification ont de préférence sensiblement une même longueur puisque les relations qui interviennent dans les formules mathématiques données précédemment sont des relations linéaires. Etant donné la présente invention qui permet de sélectionner une valeur cible $K_u^{cib}$ pour le facteur de couplage magnétique d'une génératrice de référence, formée d'un stator de référence et d'un rotor de référence (selon les spécifications prévues), qui est relativement proche de la valeur minimale $K_u^{min}$, comme ceci se comprendra aisément par la suite, on notera que la plage de valeurs 26 présente une partie dont les valeurs sont inférieures à cette valeur minimale et qui correspondent donc, pour un stator de référence, à des valeurs non fonctionnelles et donc non 'autorisées'.

Ensuite, les trois pluralités de bobines, soit la première pluralité de bobines B1, la deuxième pluralité de bobines B2, et la troisième pluralité de bobines B3, sont associées respectivement aux trois classes de rotors CR1, CR2, CR3 (formant ainsi trois couples 'pluralité de bobines et classe de rotors associées') de sorte que les rotors de chaque classe de rotors présentent des facteurs de couplage magnétique $K_u$ avec un stator correspondant, formé de deux bobines de la pluralité de bobines associée à la classe de rotors considérée, qui sont situés dans une plage de valeurs optimisée relative au couple considéré. On obtient ainsi trois plages de valeurs optimisées 28, 30, 32 relatives respectivement aux trois couples 'B1, CR1' ; 'B2, CR2' ; 'B3, CR3'. Les couples sont formés de sorte que chacune des trois plages de valeurs optimisées 28, 30 et 32 est au moins partiellement superposée avec une autre de ces trois plages de valeurs optimisées, et de sorte qu'une valeur minimale des trois plages de valeurs optimisées est supérieure à une valeur minimale des trois parties continues de classification, c'est-à-dire de la plage de valeurs 26, et qu'une valeur maximale de ces trois plages de valeurs optimisées est inférieure à une valeur maximale des trois parties continues de classification, c'est-à-dire de la plage de valeurs 26, comme ceci apparaît à la Figure 4. De plus, les trois couples sont formés de sorte que chacune des trois plages de valeurs optimisées 28, 30 et 32 correspondantes présente une valeur minimale qui est supérieure à la valeur minimale $K_u^{min}$ de la plage de valeurs 25 qui donne les valeurs fonctionnelles et donc 'autorisées' pour le facteur de couplage magnétique.

Pratiquement, la première partie continue de classification déterminant la première classe de rotors CR1 correspond à une partie inférieure de la plage de valeurs 26 où les valeurs du facteur de couplage magnétique sont inférieures à la valeur cible $K_u^{cib}$ ; la deuxième partie continue de classification déterminant la deuxième classe de rotors CR2 correspond à une partie médiane de la plage de valeurs 26 où les valeurs du facteur de couplage magnétique sont situées autour de la valeur cible $K_u^{cib}$ ; et la troisième partie continue de classification déterminant la troisième classe de rotors CR3 correspond à une partie supérieure de la plage de valeurs 26 où les valeurs du facteur de couplage magnétique sont supérieures à la valeur cible $K_u^{cib}$. Les bobines B1 de la première pluralité de bobines associée à la première classe de rotors CR1 présentent un nombre de tours du fil électrique les constituant qui est supérieur à un nombre de référence $NB_{Ref}$ prévu pour les bobines de référence du stator de référence. Les bobines B2 de la deuxième pluralité de bobines associée à la deuxième classe de rotors CR2 présentent un nombre de tours du fil électrique les constituant qui est égal audit nombre de référence. Ces bobines B2 sont donc des bobines de référence $B_{Ref}$. On notera que ce cas est avantageux lorsque le nombre de classes de rotors et donc le nombre de couples prévus est un nombre impair. Les bobines B3 de la troisième pluralité de bobines associée à la troisième classe de rotors CR3 présentent un nombre de tours du fil électrique les constituant qui est inférieur audit nombre de référence. Dans une variante avantageuse dans laquelle la plage de valeurs 26 est divisée en trois parties continues de longueur sensiblement égales, le nombre de tours NB1 du fil électrique de chaque bobine B1 est égal au nombre de référence $NB_{Ref}$ auquel on additionne un nombre d'optimisation $NB_{opt}$, soit NB1 = $NB_{Ref}$ + $NB_{opt}$, le nombre de tours NB2 du fil électrique de chaque bobine B2 est égal au nombre de référence $NB_{Ref}$, et le nombre de tours NB3 du fil électrique de chaque bobine B3 est égal au nombre de référence $NB_{Ref}$ auquel on soustrait le nombre d'optimisation $NB_{opt}$, soit NB3 = $NB_{Ref}$-$NB_{opt}$.

Finalement, l'étape d'assemblage est réalisée en assemblant les rotors de chaque classe de rotors avec un stator formé par deux bobines de la pluralité de bobines associée avec laquelle cette classe de rotors forme un des trois couples 'B1, CR1' ; 'B2, CR2' et 'B3, CR3', c'est-à-dire de sorte que toutes les génératrices des N groupes de génératrices constituant la pluralité de génératrices obtenues ont un facteur de couplage magnétique $K_u$ qui est situé dans une plage optimisée globale $PG_{opt}$, référencée 34, laquelle est comprise entièrement dans la plage de valeurs 25 assurant un fonctionnement normal pour la pluralité d'ensembles formée respectivement de la pluralité de génératrices et d'une pluralité de circuits électroniques de régulation. La plage optimisée globale 34 est donc comprise à l'intérieur de la plage de valeurs 26 et également à l'intérieur de la plage de valeurs 25.

Dans une variante préférée correspondant à la variante avantageuse décrite, les trois pluralités de bobines sont prévues et les trois couples 'pluralité de bobines et classe de rotors associées' sont formés de sorte que chacune des trois plages de valeurs optimisées est au moins partiellement superposée avec chaque autre plage de valeurs optimisée (voir Figure 4). Dans une variante optimale, les plages de valeurs optimisées sont parfaitement alignées de sorte que la plage globale optimisée PG$_{opt}$ correspond aux plages de valeurs optimisées qui sont identiques.

## Revendications

1. Procédé de fabrication d'une pluralité de génératrices (2) à aimants permanents adaptées à une application horlogère dans laquelle chaque génératrice est entraînée en rotation par un mécanisme horloger qui est entraîné par une source d'énergie mécanique et où chaque génératrice alimente un circuit électronique fonctionnant dans une plage de tension d'alimentation donnée (24), ce procédé comprenant une étape de fabrication de bobines (6A, 6B), une étape de fabrication de rotors (4), et ensuite une étape d'assemblage d'une pluralité de stators, formés chacun d'un nombre donné de bobines fabriquées lors de l'étape de fabrication de bobines, respectivement avec une pluralité de rotors, fabriqués lors de l'étape de fabrication de rotors, pour obtenir la pluralité de génératrices (2) ; l'étape de fabrication de rotors étant réalisée, avec des tolérances données, sur la base de données définissant un rotor de référence ; **caractérisé en ce que** l'étape de fabrication de bobines comprend la fabrication de N pluralités de bobines, semblables au sein d'une même pluralité et différentes d'une pluralité à l'autre, N étant un nombre entier supérieur à un (N > 1) ; **en ce que**, avant ladite étape d'assemblage de la pluralité de stators avec la pluralité de rotors, une étape de classification des rotors de la pluralité de rotors est effectuée dans N classes de rotors, les rotors de chacune des N classes de rotors étant sélectionnés de sorte qu'ils présentent un facteur de couplage magnétique avec un stator de référence, formé avec ledit nombre donné de bobines de référence placées dans une configuration de référence relativement à chaque rotor, qui est situé dans une plage de valeurs continue de classification qui est non superposée aux plages de valeurs continues de classification des autres classes de rotors ; **en ce que** les N pluralités de bobines sont associées respectivement aux N classes de rotors, formant ainsi N couples 'pluralité de bobines et classe de rotors associées', de sorte que les rotors de chaque classe de rotors présentent chacun un facteur de couplage magnétique avec un stator correspondant, formé dudit nombre donné de bobines de la pluralité de bobines associée à la classe de rotors considérée, qui est situé dans une plage de valeurs optimisée parmi N plages de valeurs optimisées relatives respectivement aux N couples, chacune des N plages de valeurs optimisées étant au moins partiellement superposée avec une autre de ces N plages de valeurs optimisées, de sorte qu'une valeur minimale des N plages de valeurs optimisées est supérieure à une valeur minimale des plages de valeurs continues de classification et qu'une valeur maximale de ces N plages de valeurs optimisées est inférieure à une valeur maximale des plages de valeurs continues de classification, et de sorte que les N plages de valeurs optimisées soient situées à l'intérieur d'une plage de valeurs (25) pour le facteur de couplage magnétique correspondant à la plage de tension d'alimentation donnée ; et **en ce que** ladite étape d'assemblage est réalisée en assemblant les rotors de chaque classe de rotors avec un stator formé par ledit nombre donné de bobines de la pluralité de bobines associée avec laquelle cette classe de rotors forme un desdits N couples.

2. Procédé de fabrication d'une pluralité de génératrices selon la revendication 1, **caractérisé en ce que** les N pluralités de bobines sont prévues et les N couples 'pluralité de bobines et classe de rotors associées' sont formés de sorte que chacune des N plages de valeurs optimisées est au moins partiellement superposée avec chaque autre plage de valeurs optimisée.

3. Procédé de fabrication d'une pluralité de génératrices selon la revendication 1 ou 2, **caractérisé en ce que** ledit nombre N est un nombre impair et un des N couples 'pluralité de bobines et classe de rotors associées' est formé par une pluralité de bobines de référence.

4. Procédé de fabrication d'une pluralité de génératrices selon une quelconque des revendications précédentes, **caractérisé en ce que** ledit mécanisme comprend un affichage analogique de l'heure et ledit circuit électronique est un circuit de régulation de la vitesse de rotation d'une génératrice associée qui est fabriquée selon ce procédé.

## Patentansprüche

1. Verfahren zur Herstellung einer Vielzahl von Generatoren (2) mit Dauermagneten, die für eine Uhrenanwendung geeignet sind, wobei jeder Generator von einem Uhrenmechanismus rotatorisch angetrieben wird, der von einer Quelle mechanischer Energie angetrieben wird und wobei jeder Generator einen elektronischen Schaltkreis versorgt, der in einem gegebenen Versorgungsspannungsbereich (24) arbeitet, wobei dieses Verfahren einen Schritt der Herstellung von Spulen (6A, 6B), einen Schritt der Herstellung von Rotoren (4) und danach einen Schritt des Zusammenbaus einer Vielzahl von Statoren umfasst, die jeweils von einer gegebenen Anzahl von Spulen gebildet sind, die bei dem Schritt der Herstellung von Spulen hergestellt wurden, jeweils mit einer Vielzahl von Rotoren, die bei dem Schritt der Herstellung von Rotoren hergestellt wurden, um die Vielzahl von Generatoren (2) zu erhalten; wobei der Schritt der Herstellung von Rotoren mit gegebenen Toleranzen auf der Basis von Daten durchgeführt wird, die einen Referenzrotor definieren; **dadurch gekennzeichnet, dass** der Schritt der Herstellung von Spulen die Herstellung von N Vielzahlen von Spulen umfasst, die innerhalb derselben Vielzahl ähnlich und von einer Vielzahl zur anderen unterschiedlich sind, wobei N eine Ganzzahl größer als eins ist (N > 1); dass vor dem Schritt des Zusammenbaus der Vielzahl von Statoren mit der Vielzahl von Rotoren ein Schritt des Klassifizierens der Rotoren von der Vielzahl von Rotoren in N Rotorklassen durchgeführt wird, wobei die Rotoren von jeder der N Rotorklassen derart ausgewählt sind, dass sie einen Magnetkopplungsfaktor mit einem Referenzstator aufweisen, der mit der gegebenen Anzahl von Referenzspulen gebildet ist, die in einer zu jedem Rotor relativen Referenzkonfiguration platziert sind, der sich in einem kontinuierlichen Klassifizierungswertebereich befindet, der die kontinuierlichen Klassifizierungswertebereiche der anderen Rotorklassen nicht überlagert; dass die N Vielzahlen von Spulen jeweils den N Rotorklassen zugeordnet sind, wodurch N Paare zugeordnete Vielzahl von Spulen und Rotorklasse' gebildet werden, so dass die Rotoren jeder Rotorklasse jeweils einen Magnetkopplungsfaktor mit einem entsprechenden Stator aufweisen, der von der gegebenen Anzahl von Spulen von der Vielzahl von Spulen gebildet ist, die der entsprechenden Rotorklasse zugeordnet ist, der sich in einem optimierten Wertebereich aus N optimierten Wertebereichen befindet, die sich jeweils auf die N Paare beziehen, wobei sich jeder der N optimierten Wertebereiche mindestens zum Teil mit einem anderen dieser N optimierten Wertebereiche überlagert, so dass ein minimaler Wert der N optimierten Wertebereiche größer als ein minimaler Wert der kontinuierlichen Klassifizierungswertebereiche ist und ein maximaler Wert dieser N optimierten Wertebereiche kleiner als ein maximaler Wert der kontinuierlichen Klassifizierungswertebereiche ist, und so dass sich die N optimierten Wertebereiche innerhalb eines Wertebereichs (25) für den Magnetkopplungsfaktor befinden, der dem gegebenen Versorgungsspannungsbereich entspricht; und dass der Schritt des Zusammenbaus durch Zusammenbauen der Rotoren jeder Rotorklasse mit einem Stator erfolgt, der von der gegebenen Anzahl von Spulen von der zugeordneten Vielzahl von Spulen gebildet ist, mit der diese Rotorklasse eins der N Paare bildet.

2. Verfahren zur Herstellung einer Vielzahl von Generatoren nach Anspruch 1, **dadurch gekennzeichnet, dass** die N Vielzahlen von Spulen vorgesehen sind und die N Paare zugeordnete Vielzahl von Spulen und Rotorklasse' derart gebildet sind, dass sich jeder der N optimierten Wertebereiche mindestens zum Teil mit jedem anderen optimierten Wertebereich überlagert.

3. Verfahren zur Herstellung einer Vielzahl von Generatoren nach Anspruch 1 oder 2, **dadurch gekennzeichnet, dass** die Zahl N eine ungerade Zahl ist und eins der N Paare zugeordnete Vielzahl von Spulen und Rotorklasse' von einer Vielzahl von Referenzspulen gebildet ist.

4. Verfahren zur Herstellung einer Vielzahl von Generatoren nach einem der vorangehenden Ansprüche, **dadurch gekennzeichnet, dass** der Mechanismus eine analoge Anzeige der Uhrzeit umfasst und der elektronische Schaltkreis ein Regulierungskreis der Rotationsgeschwindigkeit eines zugeordneten Generators ist, der nach diesem Verfahren hergestellt wird.

**Claims**

1. A method for manufacturing a plurality of permanent magnet generators (2) adapted for a horological application wherein each generator is rotated by a watch mechanism which is driven by a source of mechanical energy and where each generator power supplies an electronic circuit operating in a given power supply voltage range (24), this method comprising a step of manufacturing coils (6A, 6B), a step of manufacturing rotors (4), and then a step of assembling a plurality of stators, each formed of a given number of coils manufactured during the step of manufacturing coils, respectively with a plurality of rotors, manufactured during the step of manufacturing rotors, to obtain the plurality of generators (2); the step of manufacturing rotors being carried out, with given tolerances, on the basis of data defining a reference rotor; **characterised in that** the step of manufacturing coils comprises manufacturing N pluralities of coils, similar within the same plurality and different from one plurality to another, N being an integer greater than one (N > 1); **in that**, before said step of assembling the plurality of stators with the plurality of rotors, a step of classifying the rotors of the plurality of rotors into N classes of rotors is carried out, the rotors of each of the N classes of rotors being selected so that they have a magnetic coupling factor with a reference stator, formed with said given number of reference coils placed in a reference configuration relative to each rotor, which is located within a continuous classification value range which is not superimposed on the continuous classification value ranges of other rotor classes; **in that** the N pluralities of coils are associated respectively with the N classes of rotors, thus forming N 'plurality of coils and associated class of rotors' pairs, so that the rotors of each class of rotors each have a magnetic coupling factor with a corresponding stator, formed of said given number of coils of the plurality of coils associated with the considered class of rotors, which is located in an optimised value range among N optimised value ranges relating respectively to the N pairs, each of the N optimised value ranges being at least partially superimposed with another of these N optimised value ranges; so that a minimum value of the N optimised value ranges is greater than a minimum value of the continuous classification value ranges and that a maximum value of these N optimised value ranges is less than a maximum value of the continuous classification value ranges, and so that the N optimised value ranges lie within a range of values (25) for the magnetic coupling factor corresponding to the given power supply voltage range, and **in that** said assembly step is carried out by assembling the rotors of each class of rotors with a stator formed by said given number of coils of the associated plurality of coils with which this class of rotors forms one of said N pairs.

2. The method for manufacturing a plurality of generators according to claim 1, **characterised in that** the N pluralities of coils are provided and the N 'plurality of coils and associated class of rotors' pairs are formed so that each of the N optimised value ranges is at least partially superimposed with every other optimised value range.

3. The method for manufacturing a plurality of generators according to claim 1 or 2, **characterised in that** said number N is an odd number and one of the N 'plurality of coils and associated class of rotors' pairs is formed of a plurality of reference coils.

4. The method for manufacturing a plurality of generators according to any one of the preceding claims, **characterised in that** said mechanism comprises an analogue time display and said electronic circuit is a circuit for regulating the speed of rotation of an associated generator which is manufactured according to this method.

## Fig. 1

## Fig. 2

## Fig. 3

## Fig. 4

**RÉFÉRENCES CITÉES DANS LA DESCRIPTION**

**Documents brevets cités dans la description**

- EP 1109082 A
- EP 3438763 A

- US 6124649 A